# EUROPEAN PATENT APPLICATION

(11) **EP 3 907 689 A1**
(43) Date of publication of application: **10.11.2021**
(21) Application number: 19848959.3
(22) Date of filing: 03.01.2019
(51) Int. Cl.: G06Q 40/00

(54) **RIGHTS MANAGEMENT METHOD, DEVICE AND SYSTEM, AND STORAGE MEDIUM**

(71) Applicant: BOE Technology Group Co., Ltd., Beijing 100015 (CN)
(72) Inventor: ZHAO, Zhengong, Beijing 100176 (CN); WU, Zheng, Beijing 100176 (CN)
(74) Representative: Brötz, Helmut
(86) International application number: PCT/CN2019/070239
(87) International publication number: WO 2020/140230

(57) **Abstract**

A rights management method, a rights management device and a rights management system based on a blockchain and a storage medium are provided. The method includes: receiving a first rights statement transaction request and recording the first rights statement transaction request in the blockchain, and receiving a second rights statement transaction request and recording the second rights statement transaction request in the blockchain; the first rights statement transaction request includes a first rights statement on a first right and a first rights derivative license contract; the second rights statement transaction request includes a second rights statement on a second right and a second rights usage license contract, and the second rights statement includes: the second right is based on the first right and the first rights derivative license contract is triggered when the second rights usage license contract is executed. The method can conveniently manage the transactions such as the statement and the license of derived rights.

## Description

### TECHNICAL FIELD

The embodiments of the present disclosure relate to rights management method, device and system, and a storage medium.

### BACKGROUND

Blockchain technology is a newly emerging technology that has appeared in the field of information technology in recent years. Due to the unique characteristics such as decentralization, information tamper proof, multi-node collective maintainability, openness, privacy protection, and the like, the blockchain technology can record and provide credible transaction information data in the Internet that is untrusted.

On the other hand, with the continuous development of economy and culture, people are becoming more and more aware of the protection of intangible assets such as intellectual property rights (e.g., copyright, patent right, etc.), and hope to better use and manage these rights and their derived rights. As a result, how to more effectively protect these rights has become a matter of concern.

### SUMMARY

Some embodiments of the present disclosure provide a rights management method based on a blockchain, comprising: receiving a first rights statement transaction request and recording the first rights statement transaction request in the blockchain, wherein the first rights statement transaction request includes a first rights statement on a first right and a first rights derivative license contract; and receiving a second rights statement transaction request and recording the second rights statement transaction request in the blockchain, wherein the second rights statement transaction request comprises a second rights statement on a second right and a second rights usage license contract, and the second rights statement comprises: the second right is based on the first right and the first rights derivative license contract is triggered when the second rights usage license contract is executed.

In at least one example of the above rights management method, the second rights statement transaction request further comprises second rights derivative license contract on the second right; and when the second rights derivative license contract is executed, the first rights derivative license contract is triggered.

In at least one example of the above rights management method, recording the first rights statement transaction request in the blockchain comprises: creating a first rights statement block based on the first rights statement transaction request, and linking the first rights statement block to the blockchain; and recording the second rights statement transaction request in the blockchain comprises: creating a second rights statement block based on the second rights statement transaction request, and linking the second rights statement block to the blockchain.

In at least one example, the rights management method further comprises: receiving a second rights usage transaction request and recording the second rights usage transaction request in the blockchain, wherein the second rights usage transaction request triggers the second rights usage license contract for executing the second rights usage license contract.

In at least one example, recording the second rights usage transaction request in the blockchain comprises: creating a first rights usage block based on the second rights usage transaction request, and linking the first rights usage block to the blockchain.

In at least one example, the rights management method further comprises: receiving a third rights statement transaction request and recording the third rights statement transaction request in the blockchain, wherein the third rights statement transaction request comprises a third rights statement on a third right and a third rights usage license contract; and the third rights statement comprises: the third right is based on the second right and the second rights derivative license contract is triggered when the third rights usage license contract is executed.

In at least one example of the above rights management method, recording the third rights statement transaction request in the blockchain comprises: creating a third rights statement block based on the third rights statement transaction request, and linking the third rights statement block to the blockchain.

In at least one example of the above rights management method, the third rights statement transaction request further comprises a third rights derivative license contract on the third right; and when the third rights derivative license contract is executed, the second rights derivative license contract is triggered.

In at least one example, the rights management method further comprises: receiving a third rights usage transaction request and recording the third rights usage transaction request in the blockchain, wherein the third rights usage transaction request triggers third rights usage license contract for executing the third rights usage license contract.

In at least one example of the above rights management method, recording the third rights usage transaction request in the blockchain comprises: creating a second rights usage block based on the third rights usage transaction request, and linking the second rights usage block to the blockchain.

In at least one example of the above rights management method, the third rights statement further comprises: the third right is also based on the first right and the first rights derivative license contract is also triggered when the third rights usage license contract is executed.

In at least one example of the above rights management method, the third rights statement transaction request further comprises a third rights derivative license contract on the third right; and when the third rights derivative license contract is executed, the first rights derivative license contract and the second rights derivative license contract are triggered.

In at least one example of the above rights management method, the first rights derivative license contract comprises a plurality of first rights derivative license sub-contracts with different trigger conditions; and when the second rights usage license contract is executed, one of the plurality of first rights derivative license sub-contracts is selected and triggered.

In at least one example of the above rights management method, the second rights derivative license contract comprises a plurality of second rights derivative license sub-contracts with different trigger conditions; and when the third rights usage license contract is executed, one of the plurality of second rights derivative license sub-contracts is selected and triggered.

In at least one example of the above rights management method, the first right is a copyright or a patent right.

Some embodiments of the present disclosure provide a rights management device based on a blockchain, comprising: a processor and a memory, wherein computer executable instructions are stored on the memory; and when the computer executable instructions are executed by the processor, any one of the above rights management methods is implemented.

Some embodiments of the present disclosure provide a computer readable storage medium, storing computer executable instructions, wherein when the computer executable instructions are executed by a processor, any one of the above rights management methods is implemented.

Some embodiments of the present disclosure provide a rights management system based on a blockchain, comprising: a plurality of blockchain processing devices; at least one of the plurality of blockchain processing devices is configured to receive a first rights statement transaction request and recording the first rights statement transaction request in the blockchain, wherein the first rights statement transaction request comprises a first rights statement on a first right and a first rights derivative license contract; and at least one of the plurality of blockchain processing devices is configured to receive a second rights statement transaction request and recording the second rights statement transaction request in the blockchain, wherein the second rights statement transaction request comprises a second rights statement on a second right and a second rights usage license contract; and the second rights statement comprises: the second right is based on the first right and the first rights derivative license contract is triggered when the second rights usage license contract is executed.

In at least one example of the above rights management system, recording the first rights statement transaction request in the blockchain comprises: creating a first rights statement block based on the first rights statement transaction request, and linking the first rights statement block to the blockchain; and recording the second rights statement transaction request in the blockchain comprises: creating a second rights statement block based on the second rights statement request, and linking the second rights statement block to the blockchain.

In at least one example, the rights management system according to claim 18 or 19, further comprising a plurality of rights transaction processing devices, wherein at least one of the plurality of rights transaction processing devices is configured to generate the first rights statement transaction request or the second rights statement transaction request, and provide the first rights statement transaction request or the second rights statement transaction request to at least one of the plurality of blockchain processing devices for processing.

### BRIEF DESCRIPTION OF THE DRAWINGS

In order to clearly illustrate the technical solution of the embodiments of the disclosure, the drawings of the embodiments will be briefly described in the following; it is obvious that the described drawings are only related to some embodiments of the disclosure and thus are not limitative of the disclosure.
Fig. 1 is a system framework diagram of a copyright management device provided by some embodiments of the present disclosure;
Fig. 2A is a schematic view of a copyright management device provided by some embodiments of the present disclosure;
Fig. 2B is a schematic view of a copyright management system based on a blockchain provided by some embodiments of the present disclosure;
Fig. 3 is a schematic block diagram of a computing device for managing copyright on a blockchain according to some embodiments of the present disclosure;
Fig. 4A is a schematic view of a rights management method provided by some embodiments of the present disclosure;
Fig. 4B is a schematic view of a blockchain involved in some embodiments of the present disclosure;
Fig. 5 is a schematic view of a rights management method provided by some embodiments of the present disclosure;
Fig. 6 is a schematic view of a rights management method provided by some embodiments of the present disclosure;
Figs. 7A-7C are schematic views illustrating the cases that the rights management method involves multiple entities in some embodiments of the present disclosure;
Fig. 8 is a schematic view of a rights management device provided by some embodiments of the present disclosure; and
Fig. 9 is a schematic view of a storage medium provided by some embodiments of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

For example, there are many problems in copyright protection at present. These problems mainly focus on the unclear ownership of copyright, and the difficulty in collecting copyright royalty and license fee, which lead to copyright disputes frequently. In addition, copyright information is easy to be falsified, tampered, forged, etc. Moreover, independent producers are in a vulnerable group for copyright protection and are prone to suffer from copyright fraud. Under such circumstances, disputes over copyright profit and copyright transaction frequently occur.

Some embodiments of the present disclosure provide a rights management method, a rights management device and a rights management system, which utilize the cryptographic, distribution, and tamper-resistant characteristics of a blockchain network, combined with a smart contract, to confirm rights such as copyright and patent rights and manage the use and transaction of derived rights related to the rights, and then provide guarantee to, for example, digital asset transactions, and protect the legitimate rights and benefits of rights holders.

Description will be given below to some embodiments of the present disclosure by taking copyright as an example, but it should be understood by those skilled in the art that the embodiments of the present disclosure are not limited to copyright, but are also applicable to other types of rights such as patent rights.

A copyright owner may be a natural person, a legal person, or a social organization that owns the copyright. The copyright owner may be the creator of a work, and may also be not the author of the work, but such as the author's employer or client. Generally, the author of a work is the copyright owner, but if the copyright is transferred, the target object of copyright transfer becomes the copyright owner. The copyright owner can implement the copyright management of the work, for example, the transfer and licensing of the copyright, such as permitting others to publish, copy, broadcast, perform, exhibit, digitize, translate or adapt the work, and then obtain economic compensation. The copyright can be referred to as the initial copyright. When others publish, copy, play, perform, translate, or adapt a work that contains the initial copyright, a new work may be created, resulting in derived copyright. With the permission of the copyright owner of the initial copyright, the copyright owner of the new work can also permit others to publish, copy, broadcast, perform, exhibit, digitize, translate, or adapt the work, and thereby obtain financial compensation. The user of this new derived copyright needs permission from the copyright owner of the initial copyright and the copyright owner of the derived copyright.

Works may include literary works, text, video, audio, animation, pictures and Flash animation, etc. These works are, for example, in the form of digital content by itself or may be digitized to obtain digital content. It should be noted that: just a few types of common works are listed here, but there is no limitation to these types of works. Although a copyright is automatically created when a work is completed, the copyright may also be stated through copyright registration, so that the ownership of the copyright can be clear. The copyright statement includes the identity information of the copyright owner, the copyright identification, the description of the copyright rights, the identity information of the author, the address of the copyright owner, etc.. The copyright statement may also include the signature of the copyright owner. The copyright statement may also include basic information about the work (for example, content overview or evaluation), rights acquisition methods, rights ownership status and description, etc. The embodiments of the present disclosure do not limit the specific content of the copyright statement.

For example, a copyright license contains the rights rules of the copyright owner to use or distribute content for consumers (including natural persons, content distributors, copyright management organizations, etc.), rules of re-creation by other authors to generate derived rights, addresses of authorized objects, decryption keys of digital content, authorized digital content identification, time range and geographical range involved in the license, etc. For example, as for a patent right, a dependent patent is based on an original patent, and a dependent patent right is a derived right of the original patent.

Blockchain technology is a decentralized method for data storage, transmission and certification with distributed architecture. Blocks can be used to replace the dependence of the current Internet on a central server. For example, all data changes or transaction items can be recorded on a cloud system, which theoretically achieves the self-certification of data during data transmission.

Each block is a container data structure that is included in the blockchain and has collection of data, and it includes a block header containing metadata and a long series of transactions that follow closely the block header and form the main body of the block. The block specifically includes: block size field, usually 4 bytes; block header field, usually 80 bytes; transaction counter field, generally 1-9 bytes, recording the number of transactions; and transaction field, usually in variable length, recording transaction details.

The block header consists of three sets of metadata. The first is a set of data that references the hash value of the parent block. This set of metadata is used to connect the block with the previous block in the blockchain. The second set of metadata includes difficulty, timestamp, and number used once ("Nonce" for short). The third set of metadata is Merkle root (a data structure used to effectively summarize all transactions in a block). For example, the block header may include the following fields: (1) version field, usually 4 bytes; (2) parent block hash value field, usually 32 bytes, used to reference the parent block in the blockchain; (3) Merkle root field, used to record the hash value of the Merkle root that is transacted in the block; (4) timestamp field, usually 4 fields, used to identify the approximate time generated by the block, accurate to seconds; and (5) Nonce field, a counter for proof-of-work algorithm.

Each block can reference the previous block through the "parent block hash value field" of the block header. That is, each block header contains the hash value of the parent block. And each block has only one parent block, but there may be multiple sub-blocks temporarily. The case of multiple sub-blocks in a block is called "blockchain fork". Blockchain fork indicates a temporary state, and eventually only one sub-block will become part of the blockchain.

A blockchain is a data structure that is sequentially linked by blocks from back to front, and each block points to the previous block. It can be stored as a file containing non-relative relation records, or stored in a simple database. The blockchain may be seen as a stack. The height of the blockchain represents the distance between a subsequent block and the first block, and the top represents the latest block. Encrypting (for example, secure hash algorithm ("SHA" for short)) of each block header can generate a hash value. A block in the blockchain can be identified through this hash value correspondingly.

Blockchains can generally be divided into public chains, alliance chains, and private chains based on access authority. The public chain refers to the blockchain that anyone can access and participate in consensus according to a protocol. The alliance chain refers to the blockchain whose consensus process is controlled by preselected nodes. The private chain refers to the blockchain of which all rights are in an organization and which is arbitrarily controlled by the organization.

For an entire blockchain network, the goal to be achieved is that all the devices agree on a certain piece of information and update it to the total shared ledger. To this end, a consensus mechanism is introduced in the blockchain network. Two typical algorithms for the consensus mechanism are proof of work ("PoW" for short) and proof of equity. The essence of PoW is to add cost to information transmission, reduce the rate of information transmission, and add a random element to ensure that only one device has the right to broadcast information in a time period. This random element is for the device to calculate a random hash value. Specifically, the block device calculates a string of 64-bit random numbers and letters according to obtained input data, but only the device that obtains a hash value that meets the hash value requirements can be accepted as PoW by the blockchain network. The PoW hash algorithm also adopts the mode of taking information in each new block as the input value of the next hash algorithm to achieve the concatenation of historical information and form a traceable chain (blockchain).

A smart contract is a piece of executable code stored in a blockchain (or a blockchain node in the blockchain). This executable code stipulates the execution conditions and the service processing logic of the smart contract, that is, the startup conditions of the smart contract and how to process the received service processing request after the smart contract is started. Generally, after a smart contract is written by a user and released on the blockchain, it cannot be edited or modified. For example, the execution of a smart contract can be triggered based on an event. For example, the execution of a smart contract is recorded as a transaction on the blockchain and recorded in the blockchain.

The blockchain involved in the methods provided by some embodiments of the present disclosure will generally be stored in multiple blockchain processing devices in the network. The embodiments of the present disclosure may involve various copyright management processes, such as registration and transfer of copyright, distribution and issuance of licenses, etc. The operation of recording these copyright management processes is called a copyright management transaction. In addition, the blockchain processing device also stores data related to the consensus constraints of the blocks in the blockchain. The copyright management transactions may include copyright license transactions, and the copyright license transactions further include copyright usage license and derived copyright license. In some embodiments of the present disclosure, the copyright management transaction may have many forms of data structures, such as data of tables, files, and certain data structures. For example, the table contains information about copyright, such as version number, creation time, author, copyright owner, account information of copyright owner, etc. This file is used to record copyright statements, work abstracts, etc. The data are used to record the creation, execution and the like of smart contracts. The embodiments of the present disclosure do not limit the specific forms of the management transactions.

The copyright management method provided by some embodiments of the present disclosure applies a blockchain technology to copyright management. In some embodiments of the present disclosure, the blockchain is used as a globally-disclosed ledger data structure for copyright transactions, and contains blocks of several transactions, and the content of the blocks cannot be tampered with, thereby realizing the proof of existence of blockchain data. With the help of smart contracts, it can realize the open, transparent, and automatic account allocation of copyright management, especially derived rights license management, and better protect the interests of copyright owners.

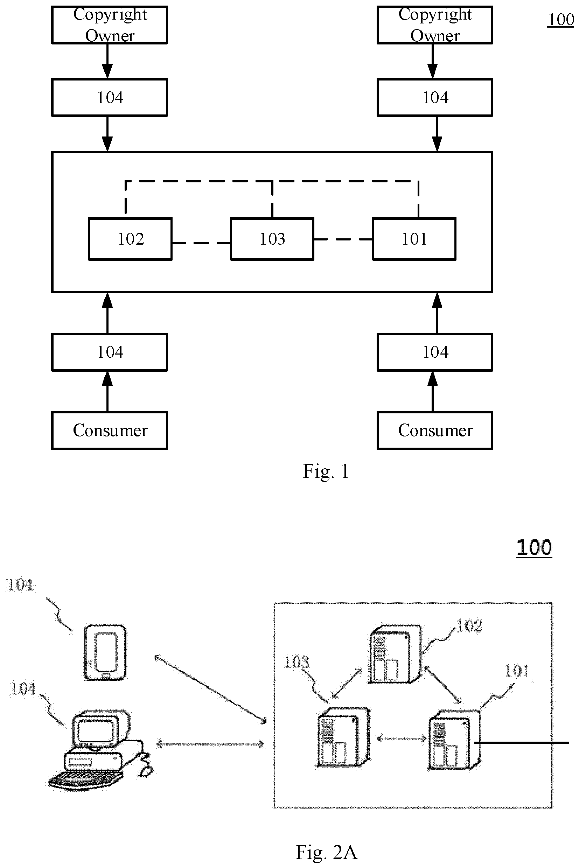

Fig. 1 is a system framework diagram of a copyright management device 100 provided by some embodiments of the present disclosure. The copyright management device 100 comprises a blockchain processing component 101, a rights transaction processing component and a copyright management client 104. In some embodiments of the present disclosure, the rights transaction processing component includes a copyright accepting unit 102 and a license processing unit 103, and may also include more other units as required. The license processing unit 103 and the copyright accepting unit 102 are respectively connected with the blockchain processing component 101. Copyright owners (including derived copyright owners) and consumers can implement corresponding copyright management transactions through this system, including publishing works and corresponding smart contracts, obtaining copyright usage licenses, copyright derivative licenses, etc. The copyright owner and the consumer connect to and log in the copyright management system through the copyright management client 104, generate corresponding rights management transactions through the rights transaction processing component (including the copyright accepting unit 102 and the license processing unit 103), and issue and record them in the blockchain through the blockchain processing unit 101. The copyright management client 104 may be connected with the copyright accepting unit 102 or the license processing unit 103 for signal transmission and processing. Main functions of the above device will be simply described below.

Fig. 2A is a schematic view of a copyright management device provided by some embodiments of the present disclosure, corresponding to the copyright management device as shown in Fig. 1. The blockchain processing component 101 may be any trusted node on a peer-to-peer (P2P) network, and may also be any node on a fully open P2P network. The blockchain processing component 101 may be deployed on a general-purpose computing device, for example, deployed on a local area network (LAN), a wide area network (WAN), or "cloud". Each computing device is called "node". The computing device can be an actual computing device or a virtual machine.

For instance, the copyright accepting unit 102 and the license processing unit 103 and the blockchain processing component 101 may be integrated in the same device. The integrated device is the above described node. In this way, this device may be referred to as a blockchain device. Thus, in some embodiments of the present disclosure, the blockchain device comprises the blockchain processing component 101, the copyright accepting unit 102 and the license processing unit 103. In this case, the interactive process between the blockchain processing component 101 and the copyright accepting unit 102, or the interactive process between the blockchain processing component 101 and the license processing unit 103, in the following processes may be seen as the interactive process between internal modules of the blockchain device. For convenient and simple description, the interactive process between the internal modules of the blockchain device has not been described in some embodiments of the present disclosure.

The blockchain processing component 101 may be configured to save the copyright management transaction after receiving the copyright management transaction sent by the copyright accepting unit 102 or the license processing unit 103. For example, the blockchain processing component 101 is configured to broadcast the successfully verified transaction, package the transaction into a block through a consensus mechanism, and link the block to the global blockchain and broadcast the linkage to all nodes in the network.

The blockchain processing component 101 may also be used for blockchain integrity verification. The blockchain integrity verification includes inspection of the following: whether the block points to the previous block; whether the timestamp generated by the block is correct; whether the block meets the consensus constraints; whether the Merkle tree of the transaction packaged into the block matches data contained in the transaction; whether the hash value of the previous block exists in a new block; whether the hash value of the transaction contained in the main body of the block calculated by using the Merkle tree matches the hash value contained in the block header; for instance, when the consensus constraint is a PoW mechanism, whether the hash value of the block header meets the PoW required by the block, and whether the deviation between the block generation timestamp and the current time is not greater than a certain value and must be later than the time of the previous block.

The blockchain processing component 101 may also be used for blockchain data synchronization, and realize the consistency of blockchain data in the blockchain network (such as P2P network). The node compares the height of the saved blockchain with the height of the latest persistent blockchain. If it is found that the height of the locally saved blockchain is less than the height of the latest blockchain, block synchronization can be requested to any node until the height of the local blockchain is consistent with that of the latest blockchain.

The blockchain processing component 101 may also be used to store blockchain data locally. There are many ways to store data, such as storing the data in a database, or storing the data as a file. There are many logical structures for storage. It can be Merkle tree or Patricia tree. The logical structure here may also be called storage template, namely storing according to a certain format.

The copyright accepting unit 102 is configured to receive copyright processing requests, such as copyright accepting statements (copyright registration), copyright transfer, etc., and verify the copyright processing requests. After the copyright processing request is successfully verified, the copyright transaction is submitted to the blockchain processing component to realize the immutability of copyright records, the existence of time, and the uniqueness of the content.

For instance, in some embodiments, when the copyright owner makes a copyright statement through the copyright management client 104, the copyright management client 104 generates a unique pair of public and private keys for the copyright owner. The process of generating the public and private keys is as follows: the copyright management client 104 generates a random pair of public and private keys at first, and sends addresses generated by the public and private keys to the copyright accepting unit 102; the copyright accepting unit 102 inquires whether the public key or the address is unique in the blockchain processing component 101; and if there is the public key or the address in the blockchain processing component 101, the copyright management client 104 is required to regenerate a random pair of public and private keys again until the public key or the address is unique.

In the case of copyright registration, the copyright accepting unit 102 may also be configured to determine that the content contained in the copyright registration request is complete, and determine that the copyright has not been registered based on the digital content identification. In the case of copyright transfer, the copyright accepting unit 102 may also be configured to check whether the copyright owner owns the copyright to be transferred according to the copyright transaction identification in the corresponding blockchain processing component 101, determine that the copyright has not been transferred, and determine that the copyright owner owns the copyright to be transferred according to the signature of the copyright owner. The copyright accepting unit 102 may also be configured to receive the copyright management transaction sent by other blockchain processing components 101, and verify the copyright management transaction.

The license processing unit 103 may be configured to receive the transaction concerning copyright license sent by the copyright owner through the copyright management client 104, verify the license transaction, and issue a license to the consumer after successful verification. The license carries the key for the digital content. The consumer uses this key to decrypt the digital content. The license transaction also includes the creation of a smart contract for copyright usage licenses, copyright derivative licenses, etc. And the smart contract is stored in the blockchain through the blockchain processing component 101, for example, stored in a certain node or multiple nodes of the blockchain. For instance, an ID number of the smart contract is generated (to protect the information of the storage node), so that when the conditions of the smart contract are met and the smart contract is triggered, the smart contract can be obtained by retrieving through the ID number and executed.

The copyright management client 104 is a client for copyright management, for example, may be provided as an application (APP) or a software development kit (SDK). APP may be a complete rights management software. For instance, as shown in Fig. 2A, the APP may be run in various computing devices 101, and may directly interact with the copyright accepting unit 102 or the license processing unit 103. These computing devices include mobile phones, tablets, personal computers, laptops, servers, etc. The SDK may be integrated into the third part software and provides rich functions together with the third part software. The functions of the copyright management client 104 include copyright registration management function, copyright license management function, copyright usage management function, etc. For instance, as for consumers and copyright owners, they may install the same copyright management clients 104, and corresponding function modules are called or activated as required. Moreover, for instance, the copyright management client 104 may also only include a certain function or multiple specific functions. As for consumers and copyright owners, they may install different versions of copyright management clients 104, as long as these versions include corresponding functional modules required to be called or activated.

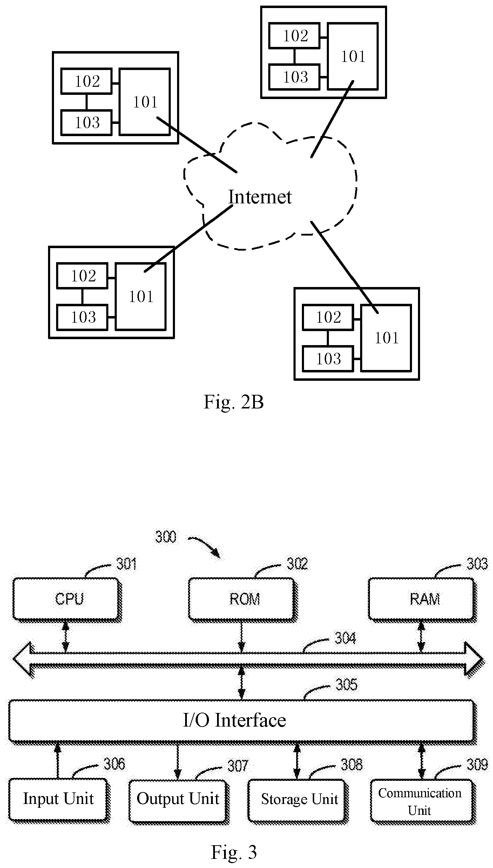

As shown in Fig. 2B, some embodiments of the present disclosure provide the network architecture of a rights management device based on a blockchain, which comprises a plurality of blockchain devices. Each blockchain device includes a blockchain processing component and a rights transaction processing component. The rights transaction processing component includes a copyright accepting unit 102 and a license processing unit 103. The blockchain processing component 101 of each of the blockchain device is connected with each other via a network (such as the Internet), that is, all connected to the network, so that all the blockchain processing components can be mutually connected and respectively taken as nodes to build the blockchain. As described above, the copyright accepting unit 102 and the license processing unit 103 may be respectively independent of the blockchain processing component 101, so the copyright accepting unit 102 and the license processing unit 103 are in one-to-one correspondence with the blockchain processing component 101.

Fig.3 is a schematic block diagram of a computing device for copyright management on a blockchain. The blockchain processing component, the copyright accepting unit, the license processing unit and the copyright management client 104 in Fig. 1, 2A or 2B each may be implemented by a computer device (or system) in Fig. 3.

As can be seen from Fig. 3, the device 300 for copyright management on a blockchain includes a central processing unit (CPU) 301, which can execute various appropriate actions and processing according to computer program instructions stored in a read-only memory (ROM) 302 or computer program instructions loaded to a random access memory (RAM) 303 from a storage unit 308. The RAM 303 may also store various programs and data required by operating the device 300. CPU 301, ROM 302 and RAM 303 are connected with each other through a bus 304. An input/output (I/O) interface 305 is also connected to the bus 304.

A plurality of components in the data processing device 30 are connected to the I/O interface 305, including: an input unit 306 such as a keyboard and a mouse; an output unit 307 such as various kinds of displays and loudspeakers; a storage unit 308 such as a magnetic disc and an optical disc; and a communication unit 309 such as a network card, a modem, a wireless communication transceiver, etc. The communication unit 309 allows the device 300 to exchange information/data with other devices via computer networks such as the Internet and/or various telecommunication networks (such as 3G/4G/5G mobile communication networks, WIFI, Bluetooth, ZigBee, etc.).

The network architecture of the rights management device as shown in Fig. 2B may be in various appropriate network modes, for example, may be trusted network or public network. In the trusted network, the blockchain processing component 101, the copyright accepting unit 102 and the license processing unit 103 all require authentication. Only after passing the authentication, they can join the network. The trusted network is equivalent to a semi-open network. In the public network, the blockchain processing component 101, the copyright accepting unit 102 and the license processing unit 103 may be any computing device on the Internet. This type of network is completely public.

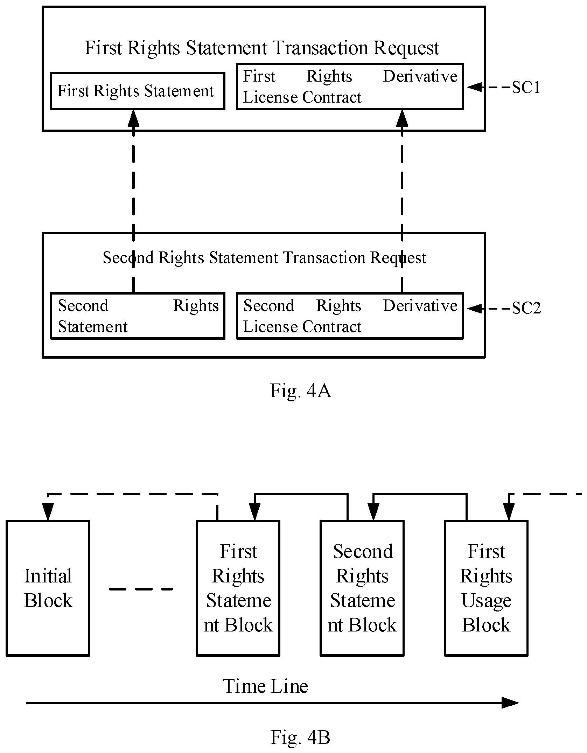

Some embodiments of the present disclosure provide a rights management method based on a blockchain. As shown in Fig. 4A, the method comprises: receiving a first rights statement transaction request and recording the first rights statement transaction request in the blockchain, and receiving a second rights statement transaction request and recording the second rights statement transaction request in the blockchain; the first rights statement transaction request includes a first rights statement on a first right and a first rights derivative license contract; the second rights statement transaction request includes a second rights statement on a second right and a second rights usage license contract; and the second rights statement includes: the second right is based on the first right, and the first rights derivative license contract is triggered when the second rights usage license contract is executed.

Taking the case that the involved right is copyright as an example, as shown in Figs. 1-3, in the method provided by the embodiment, for instance, the first copyright owner submits the first rights statement transaction request through the copyright management client 104 that is in use. The first rights statement transaction request includes a first rights statement on a first right and a first rights derivative license contract. Thus, the first copyright owner creates the first rights statement transaction request through the copyright accepting unit 102 and the license processing unit 103, and provides the first rights statement transaction request to the blockchain processing component 101. The blockchain processing component 101 builds a corresponding first rights statement block and links (writes or persists) the first rights statement block to the blockchain to record the first right, and create and store first smart contract SC1, namely recording the first rights statement transaction request in the blockchain. Or the first smart contract SC1 may also be stored on other blocks, different from the first rights statement block, in the blockchain. A corresponding smart contract ID number is allocated for the first smart contract SC1. And the smart contract SC1 may be accessed and called through the smart contract ID number.

Fig. 4B is a schematic view of a blockchain involved in some embodiments of the present disclosure. An initial block is the first block created in the blockchain. Along with timeline (as time goes by), the first rights statement block is linked to the blockchain, and directly or indirectly references the initial block created at first. Fig. 4B only shows the first rights statement block, a second rights statement block and a first rights usage block described in the present disclosure. Other blocks such as a third rights statement block and a second rights usage block may be similarly linked to the blockchain.

The first right may be the original right owned by the first copyright owner, that is, it does not depend on any other copyrights, such as original novels, paintings, music, etc., or it can be a derived right owned by the first copyright owner, such as movies, decorations, songs, etc. based on the original novels, paintings, music, etc. When the first right is a derived right, in the case of gaining profit, it may also trigger another smart contract as described below, so that the previous rights holder can obtain a corresponding proportion of income based on the allocation rule in the smart contract.

The first smart contract SC1 includes provisions on how to use the first right to generate a second right and how to allocate a revenue when the second right generates the revenue, for reference or compliance by others, without the need for the first rights holder to communicate, exchange, negotiate with subsequent derived rights holders one by one to develop appropriate contracts. For instance, the first smart contract SC1 may provide: without the consent of the first copyright owner (such as written consent or oral consent), anyone can use the first right to generate a second right, and when stating the second right, the second right should be stated as based on the first right, but when the second right generates a revenue, the revenue should be allocated between the first copyright owner and the second copyright owner according to a certain ratio (for example, the first copyright owner receives 30%). The income may be the direct income generated when the second right is used directly, or may be the indirect income caused when the second right is used to generate a derived third right and the third right generates the revenue. The income allocation proportion may be determined by the first rights holder, for example, within the range of 1% to 50%.

In the method provided by the embodiment, for instance, the second copyright owner submits a second rights statement transaction request through the used copyright management client 104 (for example, another one not used by the first copyright owner). The second rights statement transaction request includes a second rights statement on a second right and a second rights usage license contract. The second rights statement includes: the second right is based on the first right, and the first rights derivative license contract is triggered when the second rights usage license contract is executed.

In this disclosure, "the second right is based on the first right" means that the first right is used to obtain the second right. Without the permission of the rights holder of the first right, the use of the first right will lead to the infringement of the first right, and thus bear the consequences such as stopping infringement (use), compensation for economic losses, etc. The following similar expressions, such as "the third right is based on the second right", have the same effect.

In the method provided by the embodiment, for instance, the second copyright owner submits a second rights statement transaction request through the used copyright management client 104 (another one). The second rights statement transaction request includes a second rights statement on a second right and a second rights usage license contract. Thus, the second copyright owner creates the second rights statement transaction request through the copyright accepting unit 102 and the license processing unit 103, and provides the second rights statement transaction request to the blockchain processing component 101. The blockchain processing component 101 creates a corresponding second rights statement block and links the second rights statement block to the blockchain to record the second right and create and store second smart contract SC2, namely recording the second rights statement transaction request in the blockchain. With reference to Fig. 4B, the second rights statement block, for example, directly references the first rights statement block created at first. However, the embodiment of the present disclosure is not limited thereto. The second rights statement block may also indirectly reference the first rights statement block created at first. Or the second smart contract SC2 may also be stored on other blocks, different from the second block, in the blockchain. A corresponding smart contract ID number is allocated for the second smart contract SC2. And the smart contract SC2 may be accessed and called through the corresponding smart contract ID number.

In order to trigger the first rights derivative license contract when the second rights usage license contract is executed, namely triggering the first smart contract SC1 when the second smart contract SC2 is executed, for instance, the second smart contract SC2 includes provisions for the reference to the first smart contract SC1, that is, including corresponding code pointing to the first smart contract SC1, while transmitting corresponding data (for example, including the revenue for allocation by the first smart contract SC1) to the first smart contract SC1 when the second smart contract SC2 is executed.

In some embodiments of the present disclosure, the method may further comprise: receiving a second rights usage transaction request and recording the second rights usage transaction request in the blockchain; the second rights usage transaction request triggers the second rights usage license contract for the execution of the second rights usage license contract.

For instance, the first consumer submits a second rights usage transaction request through the used copyright management client 104 (another one). The second rights usage transaction request is created through the client processing unit 103, provided to the blockchain processing unit 101, and recorded in the blockchain. For instance, after determining that the transaction conditions are met and the transaction is established, the transaction is registered in the second rights statement block on the blockchain, and the second smart contract SC2 is executed. The corresponding transaction fee (for example, 1,000 yuan) is collected from the consumer's account. The transaction fee may be stored into the account of the second rights holder or additional third-party account (such as deposit account). Based on the reference of the second smart contract SC2 to the first smart contract SC1, the income allocation (for example, based on a 30% allocation proportion (that is, rate), it should be 300 yuan) that will be paid to the first rights holder is withdrawn; the first smart contract SC1 is triggered and executed; and the corresponding income allocation (namely 300 yuan) is transferred to the account of the first rights holder. Moreover, in the case of a third-party account, the remaining transaction fee temporarily stored in the third-party account is paid to the account of the second rights holder. Thus, the transaction fee of 1,000 yuan paid by the first consumer will ultimately be 700 yuan to the second rights holder and 300 yuan to the first rights holder. It should be noted here that the above allocation scheme is only for illustrative purposes, so additional factors such as taxes are not considered, and similar situations below will not be repeated.

Or in another example, the blockchain processing component 101 creates a first rights usage block based on the second rights usage transaction request, and links the first rights usage block to the blockchain. After determining that the transaction conditions are met and the transaction is established, the transaction is registered in the first rights usage block on the blockchain, and the second smart contract SC2 is executed. As shown in Fig. 4B, the first rights usage block, for instance, directly references the second rights statement block created at first. However, the embodiment of the present disclosure is not limited thereto. The first rights usage block may also indirectly reference the second rights statement block created previously.

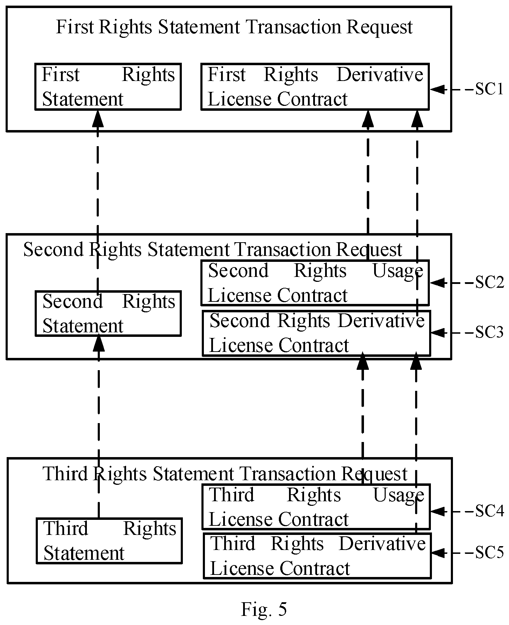

As shown in Fig. 5, in some other embodiments of the present disclosure, apart from the above steps, the second rights statement transaction request may also include a second rights declarative license contract on second right, and the first rights derivative license contract is triggered when the second rights derivative license contract is executed.

In the method provided by the embodiment, for instance, the second rights statement transaction request submitted by the second copyright owner through the copyright management client 104 also includes the second rights derivative license contract, and a third smart contract SC3 is further created and stored in the second rights statement block built on the blockchain through the license processing unit 103 and the blockchain processing component 101. Or the third smart contract SC3 may also be stored on other blocks, different from the second block, in the blockchain, and a corresponding smart contract ID number is allocated for the third smart contract SC3, and the smart contract may be accessed and called through the corresponding smart contract ID number.

The third smart contract SC3 includes provisions on how to use the second right to generate a third right and how to allocate a revenue when the third right generates the revenue. For instance, the second smart contract SC2 may provide: without the consent (such as written consent or oral consent) of the second copyright owner, anyone can use the second right to generate a third right; when stating the third right, the third right should be stated as based on the second right; when this third right generates a revenue, the revenue should be allocated between the second copyright owner and the third copyright owner according to a certain ratio (for example, the second copyright owner gets 20%). The income may be the direct income generated when the third right is used directly, or may be the indirect income caused when the second right is used to generate a derived third right and the third right generates a revenue.

As shown in Fig. 5, in some other embodiments of the present disclosure, apart from the above steps, the corresponding method further comprises: receiving a third rights statement transaction request and recording the third rights statement transaction request in the blockchain. The third rights statement transaction request includes a third rights statement on a third right and a third rights usage license contract. The third rights statement includes: the third right is based on the second right, and the second rights derivative license contract is triggered when the third rights usage license contract is executed.

In the method provided by the embodiment, for instance, the third copyright owner submits a third rights statement transaction request through the used copyright management client 104 (another one). The third rights statement transaction request includes a third rights statement on a third right and a third rights usage license contract. Thus, the third copyright owner creates the third rights statement transaction request through the copyright accepting unit 102 and the license processing unit 103, and provides the third rights statement transaction request to the blockchain processing component 101. The blockchain processing component 101 creates a corresponding third rights statement block, links the third rights statement block to the blockchain, records the third right, and creates and stores a fourth smart contract SC4, namely recording the third rights statement transaction request in the blockchain. Or the fourth smart contract SC4 may also be stored on other blocks, different from the third block, in the blockchain, and a corresponding smart contract ID number is allocated for the fourth smart contract SC4, and the smart contract may be accessed and called through the corresponding smart contract ID number.

In order to trigger the second rights derivative license contract when the third rights usage license contract is executed, namely triggering the third smart contract SC3 while executing the fourth smart contract SC4, the fourth smart contract SC4 includes the provisions for the reference to the third smart contract SC3, namely including codes pointing to the third smart contract SC3, and meanwhile, transmits corresponding data (for example, the revenue for allocation by the third smart contract SC3) to the third smart contract SC3 when the fourth smart contract SC4 is executed.

In some embodiments of the present disclosure, the corresponding method may further comprise: receiving a third rights usage transaction request and recording the third rights usage transaction request in the bockchain; the third rights usage transaction request triggers the third rights usage license contract for the execution of the third rights usage license contract.

For instance, the second consumer submits the third rights usage transaction request through the used copyright management client 104 (another one). The third rights usage transaction request is created through the license processing unit 103, provided to the blockchain processing component 101, and recorded in the blockchain. For instance, after determining that the transaction conditions are met and the transaction is established, the transaction is registered in the third rights statement block on the blockchain, and the fourth smart contract SC4 is executed. A corresponding transaction fee (for example, 1,000 yuan) is collected from the account of the second consumer. The transaction fee is deposited into the account of the third owner. Based on the reference of the fourth smart contract SC4 to the third smart contract SC3, the income allocation (for example, based on a 20% allocation proportion, it should be 200 yuan) to be paid to the second rights holder is withdrawn, and the third smart contract SC3 is triggered and executed. The corresponding income allocation (namely 200 yuan) is transferred into the account of the second rights holder.

Moreover, as the third smart contract SC3 is executed, based on the reference of the third smart contract SC3 to the first smart contract SC1, the secondary income allocation (for example, based on a 30% allocation proportion, it should be 60 yuan, i.e., 200 × 30%) to be paid to the first rights holder is withdrawn from the income (that is, 200 yuan) generated by the second right, which is a derived right of the first right, and the first smart contract SC1 is triggered and executed. As the corresponding secondary income allocation (namely 60 yuan) is transferred into the account of the first rights holder, in the above example, the 1,000 yuan transaction fee paid by the second consumer is finally 800 yuan to the third rights holder, 140 yuan to the second rights holder, and 60 yuan to the first rights holder.

Or in another example, the blockchain processing component 101 creates a second rights usage block based on the third rights usage transaction request, and links the second rights usage block to the blockchain. After determining that the transaction conditions are met and the transaction is established, the transaction is registered in the second rights usage block on the blockchain, and the fourth smart contract SC4, the third smart contract SC3 and the first smart contract SC1 are executed.

As shown in Fig. 5, in some other embodiments of the present disclosure, apart from the above steps, the third rights statement transaction request further includes a third rights derivative license contract on third right. When the third rights derivative license contract is executed, the second rights derivative license contract is triggered.

In the method provided by the embodiment, for instance, the third rights statement transaction request submitted by the third copyright owner through the used copyright management client 104 (another one) also includes the third rights derivative license contract, and a fifth smart contract SC5 is also created and stored in the third rights statement block built on the blockchain through the license processing unit 103 and the blockchain processing component 101. Or the fifth smart contract SC5 may also be stored on other blocks, different from the third block, in the blockchain, and a corresponding smart contract ID number is allocated for the fifth smart contract SC5, and the smart contract may be accessed and called through the corresponding smart contract ID number.

The fifth smart contract SC5 includes provisions on how to use the third right to generate a fourth right and how to allocate a revenue when the fourth right generates the revenue. For instance, the fifth smart contract SC5 provides: without the consent (such as written consent or oral consent) of the third copyright owner, anyone can use the third right to generate a fourth right; when stating the fourth right, the fourth right should be stated as based on the third right; when the fourth right generates a revenue, the revenue should be allocated between the third copyright owner and the fourth copyright owner according to a certain ratio (such as 20%). The income may be the direct income generated when the fourth right is used directly, and may also be the indirect income caused when the fourth right is used to generate a derived fifth right and the fifth right generates revenue.

Based on the embodiment as shown in Fig. 5, it should be understood that the rights management method may also comprise the case of more hierarchies, for instance, may also comprise: receiving a fourth rights statement transaction request and recording the fourth rights statement transaction request in the blockchain, for instance, creating a corresponding fourth rights statement block and linking the block to the blockchain. The fourth rights statement transaction request includes a fourth rights statement on the fourth right, a fourth rights usage license contract and/or a fourth rights derivative license contract. For instance, the fourth rights statement includes: the fourth right is based on any one of the first right, the second right and the third right; and any one of the first rights derivative license contract, the second rights derivative license contract and the third rights derivative license contract is triggered when the fourth rights usage license contract and/or the fourth rights derivative license contract is correspondingly executed. Herein, when the fourth rights statement includes: the fourth right is based on the first right, and the first rights derivative license contract is triggered when the fourth rights usage license contract and/or the fourth rights derivative license contract is executed, the fourth rights statement transaction request is equivalent to the second rights statement transaction request. Similarly, when the fourth rights statement includes: the fourth right is based on the second right, and the second rights derivative license contract is triggered when the fourth rights usage license contract and/or the fourth rights derivative license contract is executed, the fourth rights statement transaction request is equivalent to the third rights statement transaction request.

Similarly, the method provided by an embodiment of the present disclosure may further introduce a fifth rights statement transaction request, a sixth rights statement transaction request and the like, and correspondingly records the fifth rights statement transaction request, the sixth rights statement transaction request and the like in the blockchain, for instance, creating correspondingly a fifth rights statement block or a sixth rights statement block and linking the created block to the blockchain.

It should be understood that in the rights management method provided by the embodiments of the present disclosure, as for the embodiment as shown in Figs. 4A and 5, many different derived rights can be generated based on the same first right. For example, based on the same original novel, decoration works, stage works, and adaptations (such as abbreviated versions) may be produced. These different derived rights may not affect each other. Thus, in the blockchain, as for these different derived rights, a plurality of different second rights statement transaction requests may be generated without conflict. Similarly, different derived rights may be generated based on the same second right. Thus, in the blockchain, as for these different derived rights, a plurality of different third rights statement transaction requests may be generated without conflict. By parity of reasoning, the rights in other hierarchies may also lead to similar cases.

It should be understood that in the rights management method provided by the embodiments of the present disclosure, as for the embodiment as shown in Figs. 4A and 5, although only the case that the first rights statement transaction request includes the first rights derivative license contract is shown, the first rights statement transaction request may also include a first rights usage license contract. The first rights usage license contract may be a smart contract. When using the first right, the consumer may submit the transaction request through the copyright management client 104, trigger the smart contract, and achieve operations such as payment of fees.

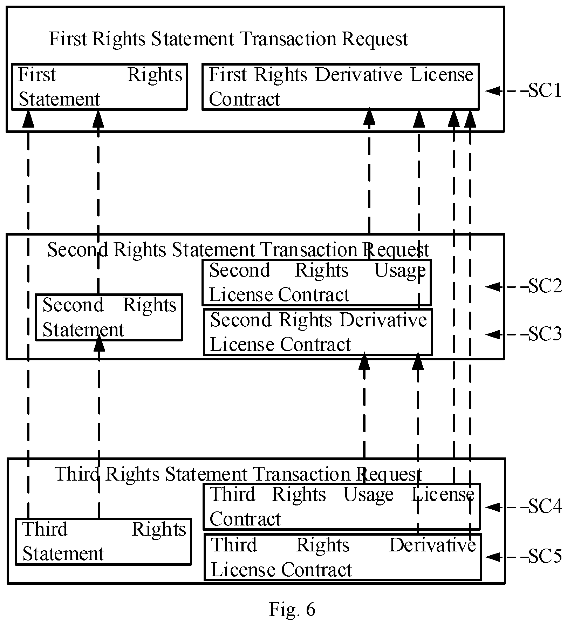

As shown in Fig. 6, in some other embodiments of the present disclosure, based on the embodiment as shown in Fig. 5, the third rights statement also includes: the third right is also based on the first right, and the first rights derivative license contract is also triggered when the third rights usage license contract is executed. That is to say, the third right not only is directly based on the second right but also is directly based on the first right, not limited to be indirectly based on the first right as described above. For instance, based on an original novel (first right), a sequel novel (second right) can be generated, and based on the original novel and the sequel novel, a film work (third right) can be generated. The third right is simultaneously based on the first right and the second right, and the first right and the second right belong to different rights holders.

Therefore, in this case, the fourth smart contract SC4 not only includes the reference to the third smart contract SC3 but also includes the reference to the first smart contract SC1. When the fourth smart contract SC4 is executed, the first smart contract SC1 and the third smart contract SC3 are triggered. Moreover, the third smart contract SC3 is triggered and executed, and then the first smart contract SC1 is triggered again.

For instance, the method provided by the embodiment may also comprise: receiving a third rights usage transaction request and recording the third rights usage transaction request in the blockchain; the third rights usage transaction request triggers the third rights usage license contract for the execution of the third rights usage license contract.

For instance, the second consumer submits the third rights usage transaction request through the used copyright management client 104 (another one). The third rights usage transaction request is created through the license processing unit 103, provided to the blockchain processing component 101, and recorded in the blockchain. For instance, after determining that the transaction conditions are met and the transaction is established, the transaction is registered in the third rights statement block on the blockchain, and the fourth smart contract SC4 is executed. A corresponding transaction fee (for example, 1, 000 yuan) is collected from the consumer's account. Based on the reference of the fourth smart contract SC4 to the third smart contract SC3, the income allocation (for example, based on a 20% allocation proportion, it should be 200 yuan) to be paid to the second rights holder is withdrawn, and the third smart contract SC3 is triggered and executed. A corresponding income allocation (namely 200 yuan) is transferred into the account of the second rights holder. Meanwhile, based on the reference of the fourth smart contract SC4 to the first smart contract SC1, the income allocation (for example, based on a 30% allocation proportion, it should be 300 yuan) to be paid to the first rights holder is withdrawn, and the first smart contract SC1 is triggered. A corresponding income allocation (namely 300 yuan) is transferred into the account of the first rights holder.

Moreover, as the third smart contract SC3 is executed, based on the reference of the third smart contract SC3 to the first smart contract SC1, a secondary income allocation (for example, based on a 30% allocation proportion, it should be 60 yuan, namely 200×30%) to be paid to the first rights holder is withdrawn from the income (namely 200 yuan) generated by the second right taken as a derived right of the first right, and the first smart contract SC1 is triggered and executed. A corresponding secondary income allocation (namely 60 yuan) is transferred into the account of the first rights holder.

Therefore, in the above example, the 1, 000 yuan transaction fee paid by the second consumer is finally 500 yuan to the third rights holder, 140 yuan to the second rights holder, and 360 yuan to the first rights holder.

Similarly, in another example, the blockchain processing component 101 builds a second rights usage block based on the third rights usage transaction request, and links the second rights usage block to the blockchain. After determining that the transaction conditions are met and the transaction is established, the transaction is registered in the second rights usage block on the blockchain, and the fourth smart contract SC4, the third smart contract SC3 and the first smart contract SC1 are executed.

Similarly, in the above embodiment, the third rights statement transaction request may also include a third rights derivative license contract on the third right, and the first rights derivative license contract and the second rights derivative license contract are triggered when the third rights derivative license contract is executed.

In the method provided by the embodiment, for instance, the third rights statement transaction request submitted by the third copyright owner through the copyright management client 104 also includes the third rights derivative license contract. A fifth smart contract SC5 is also created and stored in the third rights statement block created on the blockchian through the license processing unit 103 and the blockchain processing component 101. Or the fifth smart contract SC5 may also be stored on other blocks, different from the third block, in the blockchain, and the smart contract may be accessed and called through the corresponding smart contract ID number. The fifth smart contract SC5 includes provisions on how to use the third right to generate a fourth right and how to allocate a revenue when the fourth right generates the revenue, may be the same with that in the above-described embodiment, and will not be further described here.

In some embodiments of the present disclosure, each smart contract, for example, may include a plurality of smart sub-contracts which will be selected by other rights holders of subsequent derived rights in constructing their own smart contracts. For instance, these smart sub-contracts are parallel to each other, have different trigger conditions and different provisions, and then have different processing logics.

For instance, the first rights derivative license contract includes a plurality of rights derivative license sub-contracts with different trigger conditions, and one of the plurality of first rights derivative license sub-contracts is selected and triggered when the second rights usage license contract is executed. For instance, these first rights derivative license sub-contracts have different allocation proportions. For instance, based on the same original novel, film works, stage works or adaptations (such as abbreviated versions) can be produced. The first rights holder can use different rates for these different derived rights, for example, 10% for film work, 8% for stage play, 5% for adaptations, etc. Correspondingly, the first rights derivative license sub-contracts include: a sub-contract which has the allocation proportion of 10% and is triggered when the derived right is the film work, a sub-contract which has the allocation proportion of 5% and is triggered when the derived right is the stage play, and a sub-contract which has the allocation proportion of 5% and is triggered when the derived right is the adaptation.

Or these first rights derivative license sub-contracts have different allocation proportions, but as for the same type of derived rights, the allocation proportion is determined, for example, based on the proportion of the use of a work corresponding to the first right. For example, 5% is charged for the use of only a small portion of work corresponding to the first right; 10% is charged for the use of most of work corresponding to the first right; and 15% is charged for the use of all the work corresponding to the first right. Thus, when formulating the second rights usage license contract or the second rights derivative license contract, the second rights holder may set the reference of which first rights derivative license sub-contract according to the use ratio, and then may trigger which first rights derivative license sub-contract when the formulated contract is executed.

Similarly, in an embodiment of the present disclosure, the second rights derivative license contract includes a plurality of second rights derivative license sub-contracts with different trigger conditions, and these second rights derivative license sub-contracts may be triggered in different cases. One of the plurality of second rights derivative license sub-contracts is selected and triggered when the third rights usage license contract is executed.

Similarly, in an embodiment of the present disclosure, the third rights derivative license contract includes a plurality of third rights derivative license sub-contracts with different conditions, and these third rights derivative license sub-contracts may be triggered in different cases.

The rights management method based on a blockchain, according to embodiments of the present disclosure, by deploying a smart contract that can realize automatic account allocation on the blockchain, can easily, credibly and securely manage the complex rights chain due to derived rights, and without the need for the rights holders to get involved in licensing matters of subsequent derived rights, can realize the automatic account allocation of income, can effectively improve the fairness and transparency of the rights management system (for such as copyright, patent right, etc.), and help achieve a healthy, efficient, and orderly innovation environment.

Meanwhile, derived rights may lead to complicated rights chains. For example, a later work may be based on two or more previous works and become a derived work of these previous works. The two or more previous works may also have derivative relationship mutually, which can easily lead to complex contractual relationships (or payment relationships due to transactions). The rights management method provided by the embodiments of the present disclosure can effectively solve this problem through the blockchain and the smart contracts.

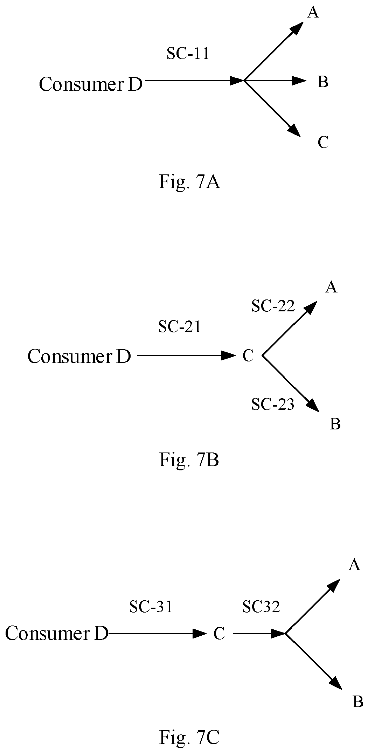

With reference to Figs. 7A-7C, there are the copyright owner A of the original work, the copyright owner B of the derived work, and the copyright owner C of the re-derived work, and the consumer (or user) D. The derived work of the copyright owner B is based on the original work of the copyright owner A. The re-derived work of the copyright owner C is based on the derived work of the copyright owner B. Because a single smart contract or a plurality of continuous smart contracts are provided, it can be ensured that the fee paid by the consumer D for the purchase of the re-derived work of the copyright owner C be paid to the copyright owners A, B and C, and, for instance, be automatically allocated among the copyright owners A, B and C according to a certain ratio (e.g., 1:2:7).

For instance, automatic account allocation may be implemented through a smart contract. The contract defines the rules and trigger conditions of account allocation, may involve multiple parties, and meanwhile, provides what allocation proportion should be adopted when a consumer purchases. As shown in Fig. 7A, when the consumer D purchases the copyright of the re-derived work, a smart contract SC-11 is triggered and executed, and the paid fee is directly allocated among the copyright owners A, B and C according to the allocation proportion specified in the smart contract, so as to avoid reallocation and realize automatic account allocation.

Moreover, for instance, automatic account allocation may be implemented through more than one smart contract, in which case at least one smart contract may trigger two or more than two smart contracts. As shown in Fig. 7B, the effectiveness of a smart contract SC-21 triggers the effectiveness of a smart contract SC-22 and a smart contract SC-23. Thus, when the consumer D purchases the copyright of the re-derived work, a smart contract 1 is triggered and executed, and the paid fee is paid to the account of the copyright owner C or the escrow account. Meanwhile, a smart contract 2 and a smart contract 3 are respectively triggered and executed, and the fee to be paid to the copyright owner A and the copyright owner B is respectively paid to the account of the copyright owner A and the copyright owner B from the account of the copyright owner C or the escrow account. Thus, automatic account allocation is realized.

Moreover, for instance, automatic account allocation may be implemented through more than one smart contract, in which at least one smart contract may allocate revenue between two or more than two entities. As shown in Fig. 7C, the effectiveness of a smart contract SC-31 triggers the effectiveness of a smart contract SC-32, and the smart contract SC-32 allocates revenue between the copyright owner A and the copyright owner B. Therefore, when the consumer D purchases the copyright of the re-derived work, the smart contract SC-31 is triggered and executed, and the paid fee is paid to the account of the copyright owner C or the escrow account. Meanwhile, the smart contract SC-32 is triggered and executed, and the fee to be paid to the copyright owner A and the copyright owner B is respectively paid to the account of the copyright owner A and the copyright owner B from the account of the copyright owner C or the escrow account. Thus, automatic account allocation is realized.

At least one embodiment of the present disclosure further provides a rights management device based on a blockchain, which comprises a processor and a memory; computer executable instructions are stored on the memory, and when the computer executable instructions are executed by the processor, the rights management method is implemented. The rights management device is deployed in the blockchain, and then implements the rights management method.

As shown in Fig. 2B, some embodiments of the present disclosure provide a rights management system based on a blockchain. The rights management system comprises a plurality of blockchain processing devices 101. At least one of the plurality of blockchain processing devices 101 is configured to receive a first rights statement transaction request and record the first rights statement transaction request in the blockchain. At least one of the plurality of blockchain processing devices is configured to receive a second rights statement transaction request and record the second rights statement transaction request in the blockchain. The first rights statement transaction request includes a first rights statement on a first right and a first rights derivative license contract. The second rights statement transaction request includes a second rights statement on a second right and a second rights usage license contract. The second rights statement includes: the second right is based on the first right, and the first rights derivative license contract is triggered when the second rights usage license contract is executed. For instance, the blockchain processing device for the first rights statement transaction request and the blockchain processing device for the second rights statement transaction request may be the same one and may also be not the same one.

For instance, the rights management system further comprises a plurality of rights transaction processing devices, which, for example, may correspond to the plurality of blockchain processing devices. At least one of the plurality of rights transaction processing devices is configured to generate the first rights statement transaction request or the second rights statement transaction request, and provide the first rights statement transaction request or the second rights statement transaction request to at least one of the plurality of blockchain processing devices for processing. For instance, the rights transaction processing device includes a rights accepting unit (copyright accepting unit 102) and a rights license processing unit (license processing unit 103), which are configured to generate the first rights statement transaction request or the second rights statement transaction request.

Corresponding to the description on the rights management method, the blockchain processing device and the rights transaction processing device of the rights management system may also include more functions.

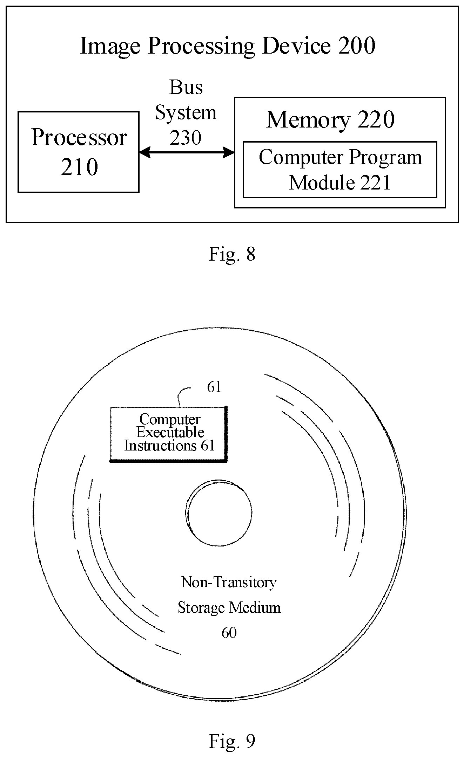

Fig. 8 is a schematic block diagram of a rights management device based on a blockchain provided by some embodiments of the present disclosure. As shown in Fig. 8, the rights management device 200 based on a blockchain includes one or more processors 210, one or more memories 220, and one or more computer program modules (instructions) 221 stored in the memory 220. The processor(s) 210 may run the computer program module(s) to realize the functions in the embodiments of the present disclosure and/or other desired functions, such as receiving requests, creating blocks, and linking the blocks to the blockchain. Various other APPs and data, such as APPs for executing smart contracts and executing transfer payment may also be stored in the memory or memories 220.

At least one embodiment of the present disclosure further provides a non-transitory computer-readable storage medium for the non-transitory storage of computer executable instructions. When the computer executable instructions are executed by a processor, the rights management method is implemented. As shown in Fig. 9, computer executable instructions 61 are stored in a non-transitory computer-readable storage medium 60 in a non-transitory manner, for the execution of the processor.

In general, various exemplary embodiments of the present disclosure may be implemented in hardware or special circuits, software, firmware, logic, or any combination thereof. Some aspects may be implemented in hardware, while other aspects may be implemented in firmware or software that may be executed by a controller, a microprocessor, or other computing devices. When various aspects of the embodiments of the present disclosure are illustrated or described as a block diagram, a flowchart, or some other graphs, it is to be understood that the blocks, devices, systems, techniques, or methods described herein may be considered as non-limiting examples and are implemented in hardware, software, firmware, general-purpose circuits or logics, general-purpose hardware or controllers, or other computing devices, or some combinations thereof.

It should be understood that the processor in the embodiments of the present disclosure may be an integrated circuit chip and has signal processing capability. The processor may be a general-purpose processor, a digital signal processor (DSP), an application specific integrated circuit (ASIC), a field programmable gate array (FPGA) or other programmable logic devices, a discrete gate or a transistor logic device, or a discrete hardware component. Various methods, steps, and logical block diagrams disclosed in the embodiments of the present application may be implemented or executed. The general-purpose processor may be a microprocessor, a CPU, a tensor processor, a neuron processor or the like, and may be based on X86 architecture, ARM architecture, etc.

The memory in the embodiments of the present disclosure may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of exemplary but not limitative description, many forms of RAMs are available, such as static random access memory (SRAM), dynamic random access memory (DRAM), synchronous dynamic random access memory (SDRAM), double data rate synchronous dynamics Random Access Memory (DDRSDRAM), enhanced synchronous dynamic random access memory (ESDRAM), synchronous link dynamic random access memory (SLDRAM), and direct memory bus random access memory (DR RAM). It should be noted that the memories of the systems and methods described herein are intended to include, but not limited to, these and any other suitable types of memories.

It should be aware of by those skilled in the art that the units and algorithm steps of each example described in combination with the embodiments disclosed herein can be implemented by electronic hardware or a combination of computer software and electronic hardware. Whether these functions are performed in hardware or software depends on the specific application and design constraints of the technical proposal. Professional technicians can use different methods to implement the described functions for each specific application, but this implementation should not be considered beyond the scope of this application.

For various embodiments provided by this disclosure, it should be understood that the described systems, devices, and methods may be implemented in other ways. For example, the device embodiments described above are only schematic. For example, the division of the units is only logical function division. In actual implementation, there may be other division manners. For example, multiple units or components may be combined or integrated into another system, or some features can be ignored or not implemented. In addition, the displayed or discussed mutual coupling or direct coupling or communication connection may be indirect coupling or communication connection through some interfaces, devices or units, and may be electrical, mechanical or in other forms.

The units described as separate components may or may not be physically separated, and the components displayed as units may or may not be physical units, namely may be located in one place, or may be distributed on multiple network units. Some or all of the units can be selected according to actual needs to achieve the purpose of the proposal of the embodiment.

In addition, the functional units in the embodiments of the present application may be integrated into one processing unit, or each unit may exist separately and physically, or two or more units may be integrated into one unit.

If the functions are implemented in the form of software functional units and sold or used as independent products, they can be stored in a computer-readable storage medium. Based on this understanding, part of this application can be embodied in the form of a computer software product, which is stored in a storage medium and includes several instructions to make a computer device (may be a personal computer, a server, a network device, etc.) perform all or part of the steps of the method described in each embodiment of this application.

What are described above is related to the illustrative embodiments of the disclosure only and not limitative to the scope of the disclosure; the scopes of the disclosure are defined by the accompanying claims.

## Claims

1. A rights management method based on a blockchain, comprising:
receiving a first rights statement transaction request and recording the first rights statement transaction request in the blockchain, wherein the first rights statement transaction request includes a first rights statement on a first right and a first rights derivative license contract; and
receiving a second rights statement transaction request and recording the second rights statement transaction request in the blockchain, wherein the second rights statement transaction request comprises a second rights statement on a second right and a second rights usage license contract, and the second rights statement comprises: the second right is based on the first right and the first rights derivative license contract is triggered when the second rights usage license contract is executed.

2. The rights management method according to claim 1, wherein the second rights statement transaction request further comprises second rights derivative license contract on the second right; and when the second rights derivative license contract is executed, the first rights derivative license contract is triggered.

3. The rights management method according to claim 1 or 2, wherein recording the first rights statement transaction request in the blockchain comprises:
creating a first rights statement block based on the first rights statement transaction request, and linking the first rights statement block to the blockchain; and recording the second rights statement transaction request in the blockchain comprises:
creating a second rights statement block based on the second rights statement transaction request, and linking the second rights statement block to the blockchain.

4. The rights management method according to any one of claims 1 to 3, further comprising:
receiving a second rights usage transaction request and recording the second rights usage transaction request in the blockchain, wherein the second rights usage transaction request triggers the second rights usage license contract for executing the second rights usage license contract.

5. The rights management method according to claim 4, wherein recording the second rights usage transaction request in the blockchain comprises:
creating a first rights usage block based on the second rights usage transaction request, and linking the first rights usage block to the blockchain.

6. The rights management method according to any one of claims 1 to 5, further comprising:
receiving a third rights statement transaction request and recording the third rights statement transaction request in the blockchain, wherein the third rights statement transaction request comprises a third rights statement on a third right and a third rights usage license contract; and
the third rights statement comprises: the third right is based on the second right and the second rights derivative license contract is triggered when the third rights usage license contract is executed.

7. The rights management method according to claim 6, wherein recording the third rights statement transaction request in the blockchain comprises:
creating a third rights statement block based on the third rights statement transaction request, and linking the third rights statement block to the blockchain.

8. The rights management method according to claim 6 or 7, wherein the third rights statement transaction request further comprises a third rights derivative license contract on the third right; and
when the third rights derivative license contract is executed, the second rights derivative license contract is triggered.

9. The rights management method according to any one of claims 6 to 8, further comprising:
receiving a third rights usage transaction request and recording the third rights usage transaction request in the blockchain, wherein the third rights usage transaction request triggers third rights usage license contract for executing the third rights usage license contract.

10. The rights management method according to claim 9, wherein recording the third rights usage transaction request in the blockchain comprises:
creating a second rights usage block based on the third rights usage transaction request, and linking the second rights usage block to the blockchain.

11. The rights management method according to claim 6 or 7, wherein the third rights statement further comprises: the third right is also based on the first right and the first rights derivative license contract is also triggered when the third rights usage license contract is executed.

12. The rights management method according to claim 11, wherein the third rights statement transaction request further comprises a third rights derivative license contract on the third right; and when the third rights derivative license contract is executed, the first rights derivative license contract and the second rights derivative license contract are triggered.

13. The rights management method according to any one of claims 1 to 12, wherein the first rights derivative license contract comprises a plurality of first rights derivative license sub-contracts with different trigger conditions; and
when the second rights usage license contract is executed, one of the plurality of first rights derivative license sub-contracts is selected and triggered.

14. The rights management method according to claim 6, wherein the second rights derivative license contract comprises a plurality of second rights derivative license sub-contracts with different trigger conditions; and
when the third rights usage license contract is executed, one of the plurality of second rights derivative license sub-contracts is selected and triggered.

15. The rights management method according to any one of claims 1 to 14, wherein the first right is a copyright or a patent right.

16. A rights management device based on a blockchain, comprising: a processor and a memory,
wherein computer executable instructions are stored on the memory; and when the computer executable instructions are executed by the processor, the rights management method according to any one of claims 1 to 14 is implemented.

17. A computer readable storage medium, storing computer executable instructions, wherein when the computer executable instructions are executed by a processor, the rights management method according to any one of claims 1 to 14 is implemented.

18. A rights management system based on a blockchain, comprising:
a plurality of blockchain processing devices, wherein
at least one of the plurality of blockchain processing devices is configured to receive a first rights statement transaction request and recording the first rights statement transaction request in the blockchain, wherein the first rights statement transaction request comprises a first rights statement on a first right and a first rights derivative license contract; and
at least one of the plurality of blockchain processing devices is configured to receive a second rights statement transaction request and recording the second rights statement transaction request in the blockchain, wherein the second rights statement transaction request comprises a second rights statement on a second right and a second rights usage license contract; and the second rights statement comprises: the second right is based on the first right and the first rights derivative license contract is triggered when the second rights usage license contract is executed.

19. The rights management system according to claim 18, wherein recording the first rights statement transaction request in the blockchain comprises:
creating a first rights statement block based on the first rights statement transaction request, and linking the first rights statement block to the blockchain; and recording the second rights statement transaction request in the blockchain comprises:
creating a second rights statement block based on the second rights statement request, and linking the second rights statement block to the blockchain.

20. The rights management system according to claim 18 or 19, further comprising a plurality of rights transaction processing devices,
wherein at least one of the plurality of rights transaction processing devices is configured to generate the first rights statement transaction request or the second rights statement transaction request, and provide the first rights statement transaction request or the second rights statement transaction request to at least one of the plurality of blockchain processing devices for processing.
